Europäisches Patentamt

European Patent Office

Office européen des brevets

(19)

(11) Veröffentlichungsnummer : **0 168 524**
**B1**

(12)             EUROPÄISCHE PATENTSCHRIFT

(45) Veröffentlichungstag der Patentschrift :
02.03.88

(21) Anmeldenummer : 84114079.1

(22) Anmeldetag : 22.11.84

(51) Int. Cl.⁴ : **B 60 C   1/00**, C 08 L   9/00,
C 08 L 53/00

(54) In der Wärme vulkanisierbare Laufstreifen für die Herstellung der Laufflächen von Kraftfahrzeug-Luftreifen.

(30) Priorität : 05.07.84 DE 3424732

(43) Veröffentlichungstag der Anmeldung :
22.01.86 Patentblatt 86/04

(45) Bekanntmachung des Hinweises auf die Patenterteilung : 02.03.88 Patentblatt 88/09

(84) Benannte Vertragsstaaten :
AT BE CH DE FR GB IT LI LU NL SE

(56) Entgegenhaltungen :
DE-A- 2 726 039
DE-C- 3 414 657
GB-A- 1 166 832
DERWENT JAPANESE PATENTS GAZETTE, Section
Chemical, J5-A, Woche 83/35, 12. Oktober 1983, Seite
7; Derwent Publications

(73) Patentinhaber : HÜLS AKTIENGESELLSCHAFT
- RSP Patente / PB 15 - Postfach 13 20
D-4370 Marl 1 (DE)

(72) Erfinder : Nordsiek, Karl-Heinz, Dr.
Neumarkstrasse 4
D-4370 Marl (DE)
Erfinder : Schwesig, Helmut
Oderbruchstrasse 21
D-4370 Marl (DE)

## Beschreibung

Die Erfindung liegt auf dem Gebiet der Herstellung der Laufflächen von Kraftfahrzeug-Luftreifen.

Die Erfindung betrifft Rohlaufstreifen zur Herstellung der Reifenlaufflächen (Oberbegriff des Patentanspruchs 1).

In den vergangenen Jahren hat sich die Reifenindustrie in zunehmendem Maße bemüht, den Rollwiderstand der Laufflächen von Kraftfahrzeug-Luftreifen zu vermindern, um damit dem dringenden Bedürfnis zu entsprechen, den Treibstoffverbrauch zu vermindern.

Die Reifenlaufflächen sollen ein gutes Eigenschaftsbild aufweisen, das durch die folgende Eigenschaftskombination beschrieben werden kann :

a) geringe Wärmebildung bei dynamischer Beanspruchung und dementsprechend niedriger Rollwiederstand, der mit einem geringen Energieverzehr und dementsprechend mit einem geringen Treibstoffverbrauch einhergeht (Wirtschaftlichkeit) ;

b) ausreichende Dämpfung im jeweils gewünschten Temperaturbereich und dementsprechend gute Naßrutschfestigkeit (Sicherheit) ;

c) hoher Abriebwiderstand und dementsprechend hohe Laufleistung (Wirtschaftlichkeit).

Diese Eigenschaftskombination wird mit den Rohlaufstreifen des Standes der Technik nur unvollkommen verwirklicht (DE-A 28 43 794, 31 33 544 und 31 51 139 ; DE-C 32 17 622 ; GB-A 2 090 840 ; US-A 4 414 363).

Die Aufgabe der Erfindung ist es, in der Hitze vulkanisierbare Rohlaufstreifen für die Herstellung der Laufflächen von Kraftfahrzeug-Luftreifen bereitzustellen, mit welchen die eingangs beschriebene Eigenschaftskombination wesentlich besser als mit den Rohlaufstreifen des Standes der Technik verwirklicht werden kann.

Weitere Eigenschaften, die verwirklicht werden sollen, sind die gute Verarbeitbarkeit der Kautschukkomponente bei den Mischprozessen, die gute Verarbeitbarkeit der vulkanisierbaren Massen bei den Verformungsprozessen und ein gutes Vulkanisationsverhalten der vulkanisierbaren Massen (Rohlaufstreifen) hinsichtlich Vulkanisationsgeschwindigkeit und Vernetzungsausbeute bei der Weiterverarbeitung zu den Reifenlaufflächen.

Die Aufgabe wurde in überraschender Weise wie im Patentanspruch 1 angegeben gelöst. Eine besonders vorteilhafte Lösung der Aufgabe entspricht dem Patentanspruch 2.

Die Erfindung stellt somit in der Hitze vulkanisierbare Rohlaufstreifen zur Herstellung der Laufflächen von Kraftfahrzeug-Luftreifen bereit, die aus vulkanisierbaren Massen erhalten sind, welche aus den folgenden Komponenten bestehen :

einer amorphen Kautschukkomponente, welche eine Mooney-Viskosität ($ML_{1+4}$, 100 °C, DIN 53 523) von 30 bis 130 aufweist,

40 bis 60 Massen-% eines aktiven, verstärkenden Füllstoffs aus der Gruppe der Laufflächenruße und der Gemische aus 80 bis 95 Massen-% eines oder mehrerer Laufflächenruße und 5 bis 20 Massen-% einer oder mehrerer, mit Silan-Haftvermittlern behandelter, aktiver Kieselsäuren,

0 bis 20 Massen-% eines in der Kautschuktechnik üblichen Weichmacheröls aus der Gruppe der aromatischen, aliphatischen und naphthenischen Kohlenwasserstoffe, jeweils bezogen auf die Kautschukkomponente,

einer wirksamen Menge eines Vulkanisationsmittels und

üblichen Zusatzstoffen.

Die vulkanisierbaren Massen sind durch die folgenden, zusätzlichen Merkmale charakterisiert :

a die Kautschukkomponente besteht aus

a.1.1 20 bis 40 Massen-% eines Polyisopren I,

a.1.2 20 bis 80 Massen-% eines Polybutadien I, wobei das Polyisopren I und das Polybutadien I als Blöcke in einem Blockcopolymerisat vorliegen können,

a.2.1 0 bis 30 Massen-% eines Polybutadien II,

a.2.2 0 bis 50 Massen-% eines Kautschuks aus der Gruppe 1,4-cis-IR und NR (Polyisopren II) und

a.2.3 0 bis 60 Massen-% SBR mit 10 bis 25 Massen-% Struktureinheiten, welche durch Polymerisation von Styrol erhalten sind, wobei Polystyrolblöcke ausgeschlossen sind ;

b die Kautschukkomponente weist eine Defo-Elastizität (80 °C, DIN 53 514) von 12 bis 45 und eine Uneinheitlichkeit (U = Mw/Mn — 1) von 0,8 bis 5,5 auf ;

c.1 das Polyisopren I, das Polybutadien I und das Blockcopolymerisat sind durch Polymerisation in einem inerten, organischen Lösemittel in Gegenwart eines lithiumorganischen Katalysators und einer Lewis-Base aus der Gruppe der Ether, der tertiären Amine und ihrer Gemische als Cokatalysator erhalten ;

c.2 das Polyisopren I und der entsprechende Block im Blockcopolymerisat bestehen aus 55 bis 85, vorzugsweise 65-75, Massen-% Struktureinheiten, die durch 1,2- und 3,4-Polymerisation und 15 bis 45, vorzugsweise 25-35, Massen-% Struktureinheiten, die durch 1,4-Polymerisation von Isopren erhalten sind ;

c.3 das Polybutadien I und der entsprechende Block im Blockcopolymerisat bestehen aus 40 bis 70 Massen-%, vorzugsweise 50-60, Struktureinheiten, die durch 1,2-Polymerisation und 30 bis 60, vorzugsweise 40-50, Massen-% Struktureinheiten, die durch 1,4-Polymerisation von 1,3-Butadien erhalten sind ;

c.4 das Polybutadien II ist durch Ziegler-Polymerisation erhalten ; es besteht aus $\leqslant$ 10 Massen-% Struktureinheiten, welche durch 1,2-Polymerisation und $\geqslant$ 90 Massen-% Struktureinheiten, welche durch 1,4-Polymerisation von 1,3-Butadien erhalten sind.

Das Polybutadien I und das Blockcopolymerisat weisen im Falle hoher Polymerisationstemperaturen (> 90 °C) Langkettenverzweigungen auf. Diese sind erwünscht im Hinblick auf einen möglichst niedrigen kalten Fluß. Falls die Langkettenverzweigungen nicht ausreichen, kann man die Polymerisation in Gegenwart von Verzweigungsmitteln, beispielsweise in Gegenwart von 0,02 bis 0,08 Massen-% Divinylbenzol, bezogen auf das Polybutadien I bzw. das Blockcopolymerisat, oder in Gegenwart von tertiärem Butylchlorid, durchführen.

Die vorstehenden, den Einbau von Verzweigungsmitteln betreffenden Ausführungen gelten entsprechend auch für das Polyisopren I.

Die Struktureinheiten, die durch 1,2- und 3,4-Polymerisation und durch 1,4-Polymerisation der Diene und durch Polymerisation von Styrol erhalten sind, werden jeweils durch IR-Analyse bestimmt.

Das Polyisopren I, das Polybutadien I und das Blockcopolymerisat werden im allgemeinen durch Polymerisation der Monomeren in einem Kohlenwasserstoff-Lösemittel in Gegenwart einer polymerisationswirksamen (aktiven) Menge von 0,02 bis 0,08 Massen-% eines $C_4$-Alkyl-lithiums, insbesondere n-Butyllithium, als Katalysator und von 0,2 bis 2 Massen-% einer bifunktionellen Lewis-Base aus der Gruppe der Ether, der tertiären Amine und ihrer Gemische als Cokatalysator (jeweils bezogen auf das Polymerisat) bei einem Massenverhältnis von Cokatalysator/aktivem Katalysator von 3 : 1 bis 200 : 1 erhalten.

Das Polybutadien II ist auf bekannte Weise erhältlich (siehe beispielsweise Hydrocarbon Processing, Vol. 44, No. 11, Nov. 1965, Seite 260).

Das Polybutadien II wird vorzugsweise durch Ziegler-Polymerisation mit einem Kobalt-Katalysator erhalten.

Das SBR wird beispielsweise durch Emulsionspolymerisation (E-SBR) oder im Falle von Vinyl-SBR durch Lösungspolymerisation erhalten. Für die Mooney-Viskositäten der der Kautschukkomponente zugrunde liegenden Polymerisate gelten folgende bevorzugte Bereiche : Polyisopren I : 60 bis 110, insbesondere 75 bis 90 ; Polybutadien I : 35 bis 70, insbesondere 45 bis 55 ; Blockcopolymerisat : 40 bis 100 ; Polyisopren II : 60 bis 110, insbesondere 75 bis 90.

Die Kautschukkomponente besteht in der Regel aus nicht mehr als vier, vorzugsweise aus nicht mehr als drei Verschnittkomponenten.

Wird eine Verschnittkomponente eingesetzt, welche als fakultativ gilt, so ist ihre Menge in der Regel $\geqslant$ 10 Massen-%.

Die Laufflächenruße sind vorzugsweise solche aus der N-300-Reihe (ASTM).

Unter Vulkanisationsmitteln werden die bekannten Vulkanisationssysteme verstanden. Ein bevorzugtes Vulkanisationssystem enthält Schwefel in Kombination mit den üblichen Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können übliche Hilfsmittel, wie beispielsweise Zinkoxid, Stearinsäure, Harzsäuren, Alterungsschutzmittel und Ozonschutzwachse, in üblichen Mengen zugesetzt werden.

Zur Herstellung der vulkanisierbaren Massen aus ihren Komponenten und zur Weiterverarbeitung zu den Rohlaufstreifen und den Vulkanisaten (Reifenlaufflächen) können die in der Reifenindustrie üblichen Misch-, Verformungs- und Vulkanisationsanlagen dienen, wie beispielsweise Innenmischer, Walzwerke, Extruder, Kalander, Spritzgießeinrichtungen, Vulkanisationspressen und kontinuierlich arbeitende Vernetzungsanlagen.

Die Rohlaufstreifen der Erfindung eignen sich zur Herstellung der Laufflächen von Pkw- und Lkw-Reifen und zwar sowohl zur Herstellung von Neureifen als auch zur Runderneuerung von Altreifen.

Die Eignung zur Herstellung der Laufflächen von Lkw-Reifen beruht auf der außergewöhnlich hohen Reversionsstabilität beim Vulkanisationsprozeß und auf der außergewöhnlich hohen Netzwerkstabilität der Reifenlaufflächen bei dynamischer Beanspruchung.

Die Erfindung wird durch die folgenden Beispiele erläutert. Darin bedeuten Teile (T.) Massenteile. Die nicht erfindungsgemäßen Vergleichsbeispiele, vulkanisierbaren Massen (Compounds), Probekörper und Testreifen werden mit großen Buchstaben bezeichnet.

Die eingesetzten Kautschuke waren : SBR 1712 (IISRP), Mooney-Viskosität : 50.

Vinyl-SBR, Mooney-Viskosität : 50, 20 Massen-% Struktureinheiten, die durch Polymerisation von Styrol, 40 Massen-% Struktureinheiten, die durch 1,2-Polymerisation und 40 Massen-% Struktureinheiten, die durch 1,4-Polymerisation von 1,3-Butadien erhalten sind (erhältlich gemäß DE-A 28 43 794 ; handel-

süblich).

Polybutadien Ia, Mooney-Viskosität : 50, 50 Massen-% Struktureinheiten, die durch 1,2-Polymerisation und 50 Massen-% Struktureinheiten, die durch 1,4-Polymerisation von 1,3-Butadien erhalten sind.

Polybutadien Ib, Mooney-Viskosität : 50, 60 Massen-% Struktureinheiten, die durch 1,2-Polymerisation und 40 Massen-% Struktureinheiten, die durch 1,4-Polymerisation von 1,3-Butadien erhalten sind.

Polyisopren Ia, Mooney-Viskosität : 85, 63 Massen-% Struktureinheiten, die durch 1,2- und 3,4-Polymerisation und 37 Massen-% Struktureinheiten, die durch 1,4-Polymerisation von Isopren erhalten sind. Polyisopren Ib, Mooney-Viskosität : 85, 74-Massen-% Struktureinheiten, die durch 1,2- und 3,4-Polymerisation und 26 Massen-% Struktureinheiten, die durch 1,4-Polymerisation von Isopren erhalten sind. NR, abgebaut bis zu einer Mooney-Viskosität von 75.

Herstellung der Compounds

### Beispiel 1 (Compound 1)

In einem Laborkneter (Typ GK 2) wurde zunächst die Grundmischung gemäß folgender Rezeptur hergestellt :

| | |
|---|---|
| Kautschukkomponente | 100 T. |
| Ruß N-339 | 45 T. |
| Alterungsschutzmittel | 2 T. |
| (N-Phenyl-N'-isopropyl-p-phenylendiamin) | |
| Zinkoxid | 3 T. |
| Stearinsäure | 2 T. |

Nach einer Lagerzeit von 6 h erfolgte die Einarbeitung des Vulkanisationsmittels, bestehend aus

| | |
|---|---|
| Schwefel | 1,9 T. |
| N-Cyclohexyl-2-benzothiazylsulfenamid (CBS) | 0,6 T. |

Die eingesetzte Kautschukkomponente bestand aus 66,7 T. Polybutadien Ia und 33,3 T. Polyisopren Ib.

### Beispiel 2 (Compound 2)

Wie Beispiel 1, jedoch bestand die Kautschukkomponente aus je 33,3 T. Polybutadien Ia, Polyisopren Ib und NR.

### Beispiel 3 (Compound 3)

Wie Beispiel 1, jedoch bestand die Kautschukkomponente aus 75 T. Polybutadien Ib und 25 T. Polyisopren Ib und das Vulkanisationsmittel aus 1,8 T. Schwefel und 0,7 T. CBS.

### Beispiel 4 (Compound 4)

Wie Beispiel 1, jedoch bestand die Kautschukkomponente aus 50 T. Polybutadien Ib, 25 T. Polyisopren Ib und 25 T. NR und das Vulkanisationsmittel aus 1,9 T. Schwefel und 0,6 T. CBS.

### Beispiel 5 (Compound 5)

Wie Beispiel 1, jedoch bestand die Kautschukkomponente aus 60 T. Polybutadien Ib und 40 T. Polyisopren Ia und das Vulkanisationsmittel aus 1,8 T. Schwefel und 0,7 T. CBS.

### Beispiel A (Compound A)

Wie Beispiel 1, jedoch wurde die Grundmischung gemäß folgender Rezeptur hergestellt :

| | |
|---|---|
| SBR 1712 | 137,5 T. |
| Ruß N-339 | 75 T. |
| Weichmacheröl (aromatischer Kohlenwasserstoff) | 3 T. |
| Alterungsschutzmittel, Zinkoxid und Stearinsäure wie in Beispiel 1 | |

Das Vulkanisationsmittel bestand aus 2 T. Schwefel, 0,2 T. Diphenylguanidin und 1,5 T. CBS.

### Beispiel B (Compound B)

Wie Beispiel 1, jedoch wurde als Kautschukkomponente Vinyl-SBR eingesetzt. Das Vulkanisationsmittel bestand aus 2 T. Schwefel und 1 T. CBS.

Herstellung der Probekörper und Testreifen

Aus den Compounds 1 bis 5, A und B wurden unter den Vernetzungsbedingungen 30 min/150 °C die vulkanisierten Probekörper 1 bis 5, A und B erhalten. Sie wurden wie in Tabelle 1 angegeben charakterisiert.

Hervorzuheben ist, daß der Abrieb der Probekörper der Erfindung das Niveau des Standes der Technik erreicht.

Bemerkenswert ist beim Vergleich der Rückprallelastizitäten der Probekörper der Erfindung mit denen der Probekörper des Standes der Technik die Tatsache, daß erstere bei 20 °C kleiner oder gleich und bei 75 °C größer als letztere sind.

Zur weiteren Prüfung wurden Reifentests durchgeführt. Zunächst wurde der Rollwiderstand von handelsüblichen Reifen der Dimension 175 SR 14 auf einem geeigneten Prüfstand bestimmt. Dann wurden die Laufflächen bis zu einer exakt eingehaltenen Rauhtiefe entfernt und die Rohlaufstreifen aus den Compounds 1 bis 5, A und B in exakt gleicher Dicke aufgebracht. Unter den Vernetzungsbedingungen 35 bis 41 min bei 154 °C Formtemperatur und 120 °C Balgtemperatur wurden die Testreifen 1 bis 5, A und B erhalten. Der Rollwiderstand wurde bestimmt und jeweils die Differenz zum Rollwiderstand des ursprünglichen Reifens berechnet. Die Differenz beim Testreifen A wurde gleich 100 gesetzt. Die Differenzen der anderen Reifen wurden damit in Beziehung gesetzt (Bewertung mit Indexzahlen, Tabelle 2 ; hohe Indexzahl bedeutet hoher Rollwiderstand).

Die gleichen Reifen wurden mit einem BMW 735i als Testfahrzeug einem Rutschtest auf nasser Asphaltfahrbahn (Umgebungstemperatur 15 °C) unterworfen. Durch Blockierung der Vorderräder wurde gebremst. Die Naßrutschfestigkeit der Testreifen A wurde mit 100 bewertet. Die Meßdaten der anderen Reifen wurden damit in Beziehung gesetzt (Bewertung mit Indexzahlen, Tabelle 2 ; hohe Indexzahl bedeutet hohe Naßrutschfestigkeit).

Die mit den Rohlaufstreifen der Erfindung erhaltenen Testreifen 1 bis 5 weisen im Vergleich mit den Testreifen A und B des Standes der Technik einen deutlich verbesserten (erniedrigten) Rollwiderstand ohne Verschlechterung (Erniedrigung) der Naßrutschfestigkeit auf.

## Tabelle 1

### Anwendungstechnische Eigenschaften der vulkanisierten Probekörper

| Probekörper | 1 | 2 | 3 | 4 | 5 | A | B |
|---|---|---|---|---|---|---|---|
| Zugfestigkeit (DIN 53 504), $\mathit{/}$MPa$\mathit{7}$ | 13,9 | 16,0 | 14,5 | 15,5 | 14,8 | 18,1 | 17,5 |
| Bruchdehnung (DIN 53 504), $\mathit{/}$%$\mathit{7}$ | 390 | 436 | 405 | 425 | 415 | 516 | 420 |
| Modul 300 % (DIN 53 504), $\mathit{/}$MPa$\mathit{7}$ | 9,6 | 9,5 | 9,8 | 9,5 | 9,4 | 9,5 | 9,9 |
| Härte, 20 °C, Shore A | 64 | 63 | 65 | 63 | 64 | 63 | 65 |
| Rückprallelastizität, 20 °C, (DIN 53 512), $\mathit{/}$%$\mathit{7}$ | 30 | 30 | 27 | 28 | 32 | 32 | 36 |
| Rückprallelastizität, 75 °C, (DIN 53 512), $\mathit{/}$%$\mathit{7}$ | 64 | 64 | 65 | 64 | 63 | 51 | 58 |
| Dämpfung, 20 °C, 1 Hz (RHEOVIBRON-Gerät), tan Delta | 0,209 | 0,200 | 0,225 | 0,210 | 0,190 | 0,180 | 0,15C |
| Dämpfung, 60 °C, 1 Hz (RHEOVIBRON-Gerät), tan Delta | 0,082 | 0,073 | 0,080 | 0,075 | 0,085 | 0,117 | 0,100 |
| Abrieb (DIN 53 516), $\mathit{/}$mm³$\mathit{7}$ | 117 | 126 | 110 | 129 | 119 | 131 | 127 |
| dynamische Erwärmung (Kugelzermürbung nach Martens *) $\mathit{/}$°C$\mathit{7}$ | | | | | | | |
|     2 000 U/15 min, 150 N | 84 | 85 | 81 | 85 | 84. | 106 | 96 |
|     4 000 U/30 min, 200 N | 117 | 116 | 112 | 113 | 116 | 135 | 122 |
|     6 000 U/45 min, 250 N | 132 | 141 | 128 | 138 | 130 | 164 | 156 |

* Hauser, Handbuch der Kautschuktechnologie, Bd. 1 (1934) Seite 119

## Tabelle 2

### Reifentests

| Testreifen | 1 | 2 | 3 | 4 | 5 | A | B |
|---|---|---|---|---|---|---|---|
| Rollwiderstand | 83 | 85 | 83 | 85 | 85 | 100 | 90 |
| Naßrutschfestigkeit | 100 | 102 | 104 | 100 | 103 | 100 | 94 |

0 168 524

# 0 168 524

## Patentansprüche

1. In der Hitze vulkanisierbare Rohlaufstreifen zur Herstellung der Laufflächen von Kraftfahrzeug-Luftreifen, erhalten aus vulkanisierbaren Massen, welche aus folgenden Komponenten bestehen :

einer amorphen Kautschukkomponente, welche eine Mooney-Viskosität ($ML_{1+4}$, 100 °C, DIN 53 523) von 30 bis 130 aufweist,

40 bis 60 Massen-% eines aktiven, verstärkenden Füllstoffs aus der Gruppe der Laufflächenruße und der Gemische aus 80 bis 95 Massen-% eines oder mehrerer Laufflächenruße und 5 bis 20 Massen-% einer oder mehrerer, mit Silan-Haftvermittlern behandelter, aktiver Kieselsäuren,

0 bis 20 Massen-% eines in der Kautschuktechnik üblichen Weichmacheröls aus der Gruppe der aromatischen, aliphatischen und naphthenischen Kohlenwasserstoffe, jeweils bezogen auf die Kautschukkomponente,

einer wirksamen Menge eines Vulkanisationsmittels und

üblichen Zusatzstoffen,

und durch die folgenden, zusätzlichen Merkmale gekennzeichnet sind :

a die Kautschukkomponente besteht aus

a.1.1 20 bis 40 Massen-% eines Polyisopren I,

a.1.2 20 bis 80 Massen-% eines Polybutadien I, wobei das Polyisopren I und das Polybutadien I als Blöcke in einem Blockcopolymerisat vorliegen können,

a.2.1 0 bis 30 Massen-% eines Polybutadien II,

a.2.2 0 bis 50 Massen-% eines Kautschuks aus der Gruppe 1,4-cis-IR und NR (Polyisopren II) und

a.2.3 0 bis 60 Massen-% SBR mit 10 bis 25 Massen-% Struktureinheiten, welche durch Polymerisation von Styrol erhalten sind, wobei Polystyrolblöcke ausgeschlossen sind ;

b die Kautschukkomponente weist eine Defo-Elastizität (80 °C, DIN 53 514) von 12 bis 45 und eine Uneinheitlichkeit (U = Mw/Mn — 1) von 0,8 bis 5,5 auf ;

c.1 das Polyisopren I, das Polybutadien I und das Blockcopolymerisat sind durch Polymerisation in einem inerten, organischen Lösemittel in Gegenwart eines lithiumorganischen Katalysators und einer Lewis-Base aus der Gruppe der Ether, der tertiären Amine und ihrer Gemische als Cokatalysator erhalten ;

c.2 das Polyisopren I und der entsprechende Block im Blockcopolymerisat bestehen aus 55 bis 85 Massen-% Struktureinheiten, die durch 1,2- und 3,4-Polymerisation und 15 bis 45 Massen-% Struktureinheiten, die durch 1,4-Polymerisation von Isopren erhalten sind ;

c.3 das Polybutadien I und der entsprechende Block im Blockcopolymerisat bestehen aus 40 bis 70 Massen-% Struktureinheiten, die durch 1,2-Polymerisation und 30 bis 60 Massen-% Struktureinheiten, die durch 1,4-Polymerisation von 1,3-Butadien erhalten sind ;

c.4 das Polybutadien II ist durch Ziegler-Polymerisation erhalten ; es besteht aus ≤ 10 Massen-% Struktureinheiten, welche durch 1,2-Polymerisation und ≥ 90 Massen-% Struktureinheiten, welche durch 1,4-Polymerisation von 1,3-Butadien erhalten sind.

2. Rohlaufstreifen nach Anspruch 1, gekennzeichnet durch die folgenden Merkmale :

d.1 das Polyisopren I und der entsprechende Block im Blockcopolymerisat bestehen aus 65 bis 75 Massen-% Struktureinheiten, die durch 1,2- und 3,4-Polymerisation und 25 bis 35 Massen-% Struktureinheiten, die durch 1,4-Polymerisation von Isopren erhalten sind ;

d.2 das Polybutadien I und der entsprechende Block im Blockcopolymerisat bestehen aus 50 bis 60 Massen-% Struktureinheiten, die durch 1,2-Polymerisation und 40 bis 50 Massen-% Struktureinheiten, die durch 1,4-Polymerisation von 1,3-Butadien erhalten sind.

## Claims

1. Heat-vulcanisable tread strips for the production of treads for pneumatic tyres for motor vehicles, obtained from vulcanisable masses which are composed of the following components :

an amorphous rubber component which has a Mooney viscosity ($ML_{1+4}$, 100 °C, DIN 53523) of 30 to 130,

40 to 60 % by mass based on the rubber component of an active reinforcing filler selected from tread carbon blacks and mixtures of 80 to 95 % by mass of one or more tread carbon blacks and 5 to 20 % by mass of one or more active silicic acids treated with silane coupling agents,

0 to 20 % by mass based on the rubber component of a plasticising oil conventional in rubber technology and selected from aromatic, aliphatic and naphthenic hydrocarbons,

an effective amount of a vulcanising agent, and

conventional additives,

and which are characterised by the following additional features :

a) the rubber component is composed of

a.1.1) 20 to 40 % by mass of a polyisoprene I,

a.1.2) 20 to 80 % by mass of a polybutadiene I, the poly isoprene I and the polybutadiene I being optionally present as blocks in a block copolymer, a.2.1) 0 to 30 % by mass of a polybutadiene II

a.2.2) 0 to 50 % by mass of a rubber selected from 1,4-cis-IR and NR (polyisoprene II), and

a.2.3) 0 to 60 % by mass of SBR with 10 to 25 % by mass of structural units obtained by polymerisation of styrene, polystyrene blocks being excluded ;

b) the rubber component has a Defo elasticity (80 °C, DIN 53514) of 12 to 45 and an inhomogeneity (U = Mw/Mn — 1) of 0.8 to 5.5 ;

c.1) the polyisoprene I and the polybutadiene I or the block copolymer are obtained by polymerisation in an inert, organic solvent in the presence of an organolithium catalyst and a Lewis base selected from ethers, tertiary amines and their mixtures as cocatalyst ;

c.2) the polyisoprene I or the corresponding block in the block copolymer consists of 55 to 85 % by mass of structural units obtained by 1,2- and 3,4-polymerisation of isoprene and 15 % to 45 % by mass of structural units obtained by 1,4-polymerisation of isoprene ;

c.3) the polybutadiene I or the corresponding block in the block copolymer consists of 40 to 70 % by mass of structural units obtained by 1,2-polymerisation of 1,3-butadiene and 30 to 60 % by mass of structural units obtained by 1,4-polymerisation of 1,3-butadiene ; and

c.4) the polybutadiene II is obtained by Ziegler polymerisation and consists of not more than 10 % by mass of structural units obtained by 1,2-polymerisation and not less than 90 % by mass of structural units obtained by 1,4-polymerisation of 1,3-butadiene.

2. Tread strips according to claim 1, characterised by the following features :

d.1) the polyisoprene I or the corresponding block in the block copolymer consists of 65 to 75 % by mass of structural units obtained by 1,2- and 3,4-polymerisation of isoprene and 25 to 35 % by mass of structural units obtained by 1,4-polymerisation of isoprene ; and

d.2) the polybutadiene I or the corresponding block in the block copolymer consists of 50 to 60 % by mass of structural units obtained by 1,2-polymerisation of 1,3-butadiene and 40 to 50 % by mass of structural units obtained by 1,4-polymerisation of 1,3-butadiene.

## Revendications

1. Bandes de rechapage vulcanisables à chaud pour la fabrication des bandes de roulement de pneumatiques de véhicules automobiles, obtenues en partant de masses vulcanisables qui sont formées par les constituants suivants :

un constituant caoutchouteux amorphe qui présente une viscosité Mooney (ML$_{1+4}$, 100 °C, DIN 53 523) de 30 à 130,

40 à 60 % en masse d'une charge active de renforcement prise dans le groupe des noirs de carbone pour bandes de roulement et des mélanges de 80 à 95 % en masse d'un ou plusieurs noirs de carbone pour bandes de roulement et de 5 à 20 % en masse d'une ou plusieurs silices actives traitées par des agents d'accrochage de type silane,

zéro à 20 % en masse d'une huile plastifiante usuelle dans la technique du caoutchouc, prise dans le groupe des hydrocarbures aromatiques, aliphatiques et naphténiques, chaque fois relativement au constituant caoutchouc,

une quantité efficace d'un agent de vulcanisation et

d'additifs usuels,

et qui sont caractérisées par les particularités supplémentaires suivantes :

a le constituant caoutchouc est formé

a.1.1 par 20 à 40 % en masse d'un poly-isoprène I,

a.1.2 par 20 à 80 % en masse d'un polybutadiène I, le poly-isoprène I et le polybutadiène I pouvant être présents en tant que séquences dans un copolymère séquencé,

a.2.1 par zéro à 30 % en masse d'un polybutadiène II,

a.2.2 par zéro à 50 % en masse d'un caoutchouc pris dans le groupe 1,4-cis-IR et NR (poly-isoprène II) et

a.2.3 par zéro à 60 % en masse de SBR contenant de 10 à 25 % en masse d'unités structurales qui ont été obtenues par polymérisation de styrène, les séquences polystyrène étant exclues ;

b le constituant caoutchouteux présente une élasticité Defo (80 °C, DIN 53 514) de 12 à 45 et une hétérogénéité (U = Mw/Mn — 1) de 0,8 à 5,5 ;

c.1 le poly-isoprène I, le polybutadiène I et le copolymère séquencé ont été obtenus par polymérisation dans un solvant organique inerte, en présence d'un catalyseur organo-lithium et d'une base de Lewis prise dans le groupe des éthers, des amines tertiaires et de leurs mélanges comme co-catalyseur ;

c.2 le poly-isoprène I et la séquence correspondante dans le copolymère séquencé sont formés de 55 à 85 % en masse d'unités structurales qui ont été obtenues par polymérisation 1,2 et 3,4 et 15 à 45 % en masse d'unités structurales qui ont été obtenues par polymérisation 1,4 de l'isoprène ;

c.3 le polybutadiène I et la séquence correspondante dans le copolymère séquencé sont formés de 40 à 70 % en masse d'unités structurales qui ont été obtenues par polymérisation 1,2 et de 30 à 60 % en masse d'unités structurales qui ont été obtenues par polymérisation 1,4 du 1,3-butadiène ;

c.4 le polybutadiène II a été obtenu par polymérisation Ziegler ; il est formé de 10 % en masse au maximum d'unités structurales qui ont été obtenues par polymérisation 1,2 et de 90 % en masse au minimum d'unités structurales qui ont été obtenues par polymérisation 1,4 du 1,3-butadiène.

2. Bandes de rechapage selon la revendication 1, caractérisée par les particularités suivantes :

d.1 le polyisoprène I et la séquence correspondante du copolymère séquencé sont formés de 65 à 75 % en masse d'unités structurales qui ont été obtenues par polymérisation 1,2 et 3,4 et de 25 à 35 % en masse d'unités structurales qui ont été obtenues par polymérisation 1,4 de l'isoprène ;

d.2 le polybutadiène I et la séquence correspondante du copolymère séquencé sont formés de 50 à 60 % en masse d'unités structurales qui ont été obtenues par polymérisation 1,2 et de 40 à 50 % en masse d'unités structurales qui ont été obtenues par polymérisation 1,4 du 1,3-butadiène.